(19) Europäisches Patentamt / European Patent Office / Office européen des brevets

(11) **EP 3 828 152 B1**

(12) **EUROPEAN PATENT SPECIFICATION**

(45) Date of publication and mention
of the grant of the patent:
**29.06.2022 Bulletin 2022/26**

(21) Application number: **19212390.9**

(22) Date of filing: **29.11.2019**

(51) International Patent Classification (IPC):
*F27B 7/38* $^{(2006.01)}$      *F27D 15/02* $^{(2006.01)}$

(52) Cooperative Patent Classification (CPC):
**F27B 7/383; F27D 15/022**

(54) **CLINKER INLET DISTRIBUTION SYSTEM**

**KLINKEREINLASSVERTEILUNGSSYSTEM**

**SYSTÈME DE DISTRIBUTION D'ENTRÉE DE CLINKER**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.06.2021 Bulletin 2021/22**

(73) Proprietor: **Alite GmbH
31535 Neustadt (DE)**

(72) Inventor: **von Wedel, Mr. Karl
31535 Neustadt (DE)**

(74) Representative: **Lohr, Jöstingmeier & Partner
Junkersstraße 3
82178 Puchheim/München (DE)**

(56) References cited:
EP-A1- 3 112 786      US-A- 2 103 170
US-A- 5 683 043      US-A- 5 976 243
US-A1- 2016 223 261

EP 3 828 152 B1

## Description

### Field of the invention

The invention relates to a cement clinker inlet distribution grate for a cement clinker cooler. The cement clinker inlet distribution grate comprises a chute formed by a number of grate elements being mounted to a support structure and defining a support surface for receiving cement clinker from a kiln. The invention as well relates to a cement clinker cooler having the cement clinker inlet distribution grate.

### Description of the related art

An overview over present techniques in cement clinker cooling has been provided by Harder Latest trends in clinker cooling (published in ZKG International 2011, vol. 3, p. 32ff), being incorporated by reference as if fully disclosed herein.

An important step in manufacturing cement clinker (briefly *clinker*) is firing raw material in a cement clinker kiln, hereinafter 'kiln' to clinker. The kiln releases the clinker onto a cooling grate of a cement clinker cooler. On the cooling grate, the clinker forms a clinker bed and is cooled down mostly by direct heat exchange with a coolant. The coolant is in turn heated up and the corresponding heat can be used as process heat, e.g. in a calciner, for drying raw material, etc.. To increase heat recuperation, it is essential to form a clinker bed having an essentially constant height across the width of the cooling grate. As well, the clinker grain distribution over the width and length of the clinker bed should be homogeneous.

A cooling grate of a cement clinker cooler typically has at least two sections: A receiving section with a grate configured for receiving the clinker being released from the kiln and a second subsequent section receiving clinker from the receiving section. The receiving section is as well referred to as inlet section. The second section may be followed by a number of further sections (see, e.g. Karl v. Wedel Performance of IKN grate coolers, Cement International vol. 5, 2007, pages 96ff; Harder *Latest trends in clinker cooling,* ibid. and DE 10 2011 055 658). Herein, we will focus mainly on the receiving section, being required for distributing the hot clinker to the subsequent cooling grate. Accordingly, this receiving section is referred to as Clinker Inlet Distribution System. The grate surface of the receiving section is small, compared to the grate surface of the subsequent sections), but the receiving section has an enormous impact on the cooling efficiency and thus the heat recuperation, as the receiving section defines the clinker distribution across the width and length of the subsequent section(s).

The receiving sections of present cement clinker lines have an inclined static grate surface. The clinker falls from the kiln's clinker outlet onto the inclined static grate surface and slides down onto the subsequent section. Thus, clinker transport from the kiln to the second section is essentially obtained by gravity.

EP 3 112 786 A1 suggests a cement clinker cooler with a receiving section. The receiving section has a grate surface with overlapping rows of grate elements, wherein the grate elements are arranged one besides of the other. To remove buildups of adhering clinker, a small number of grate elements in between of static grate elements can be shifted forth and back parallel to the grate surface.

EP 0 826 940 B1 suggests a homogenization of the clinker bed height on the second grate section by retaining the clinker flow in the receiving section in sections showing an enhanced clinker height to thereby trigger a clinker flow to those portions of the grate with a reduced height.

US 2016/223261 A1 suggests a walking floor type conveyor for cooling and conveying cement clinker from a rotary kiln to a clinker outlet of the conveyor. The walking floor type conveyor comprises longitudinal reciprocating planks which extend in parallel to the conveying direction and are arranged one besides of the other with moving gaps in between.

US 5 683 043 suggests a pusher grate cooler with a cooling grate including stationary plates and oscillating grate plates. The material on the cooling grate is transported onto an oscillating screen. The oscillating screen is inserted between the material discharge end of the grate system and a crusher. The oscillating screen separates the fine and extra fine fractions of the material from the oversize fraction. A crusher having a feed hopper is located at the end of the oscillating screen and loaded with the oversize material. The oscillating screen immediately upstream of the crusher, eliminates the problem of material piling up in front of the crusher.

Additional clinker cooler grates with oscillating grate plates are also known from US 2 103 170 A and US 5 976 243 A.

### Summary of the invention

The invention addresses the problem of increasing the efficiency of energy recuperation in cement clinker plants.

Solutions to the problem are described in the independent claim 1. The dependent claims 2 to 12 relate to further improvements of the invention.

The invention is based on the observation that clinker transport on second and further subsequent grate sections is presently obtained by a synchronous reciprocating movement of conveying means. These conveying means push the clinker forward when being advanced and slide backwards below the lowest layer of the clinker bed when being retracted. This conveying mechanism results in a clinker bed that as a function of time moves iteratively forward. In other words, when the conveying means move forward, the clinker bed has a non-zero forward speed and when the conveying means are retracted, the speed of the clinker bed is essentially zero.

The clinker on the receiving section, however, slides down the grate of the receiving section. The rate of sliding clinker depends, beyond other parameters on the amount of clinker being released by the kiln onto the receiving section. Variations in clinker release per amount of time cause a variation of the sliding rate and thus as well of the height of the clinker bed on the subsequent section of the cooling grate.

In many present installations, the lowest layer of clinker on the receiving section does not move relative to the grate surface supporting the clinker. Conveying takes place each time when newly added clinker would result in a slope being steeper than the critical angle of repose of clinker. The newly added clinker thus slides down the angle of repose, but without sliding over the chute's surface.

Accordingly, when the conveying means of the second section move forward and by chance no newly added clinker slides down the receiving section onto the second section, the bed height on the second section becomes inhomogeneous. This inhomogeneity is detrimental to efficient heat recuperation. Even if one assumes a theoretically constant clinker release rate from the kiln onto the receiving section, one would expect oscillations in the clinker bed height on the second grate section.

The invention addresses this problem by exciting vibrations of a number of grate elements of the receiving section. These vibrations reduce the critical angle of repose, i.e. when the clinker on the subsequent second grate section is pushed forward, more clinker flows downward to fill the gap. The vibrations may even induce the clinker on the receiving section to slide over the grate surface, thereby following the clinker being pushed forward on the second grate section. Any stick-slip effect is significantly reduced by the vibration of at least one grate segment. The vibrations may contribute at least to a partial fluidization of at least a portion of the clinker residing on the receiving section. The clinker on the grate of the receiving section therefore essentially follows, due to the vibrations, any movement of the clinker on the subsequent second grate section.

At this point it is pointed out that a vibration of a grate element distinguishes from reciprocation of the same grate element: In clinker cooling, a reciprocation of a grate element is a macroscopic (relative to the clinker grain size) movement intended to push clinker residing on and/or in front of the grate element forward. Typically, the stroke of reciprocating grate elements is in the order of 2 - *25cm,* mostly between 5 - 15cm. Very generally speaking, there are multiple possibilities for distinguishing a vibration from a reciprocating movement:

(i) By its generation: A translational vibration of a grate element can be distinguished from a reciprocation of a grate element by its generation. A vibration is based on exciting an oscillation wherein at least a portion of the restoring forces causing a movement of matter in a direction opposite to the direction of the initial exciting force(s) is based on elasticity. For example, vibrations can be translational vibrations. In this case a vibrational drive causes the at least one first grate element to translate in a first direction and subsequently in a second direction, wherein at least a portion of the energy for accelerating the grate plate in the second direction has previously been absorbed by an elastic material and is subsequently converted from potential energy into kinetic energy. Similarly, vibrations can be rotational vibrations, in this case the vibrational drive excites a rotation of the grate element between at least two angular positions. Another type of vibration is obtained by exciting at least one normal mode of the respective grate element or of at least a portion of a support structure supporting the at least one first grate plate. Of course, all these types of vibrations may be combined, i.e. a vibration may be a superposition of translational vibration(s), rotational vibration(s) and elastic deformation(s) of the grate element, of at least a portion of the grate element and/or at least a portion of a support structure supporting the at least one grate element. Internal friction dampens, (i.e. reduces by conversion of macroscopic vibrational energy into heat) the vibrations in addition to the clinker residing on the at least one first grate plate. The vibrational drive may compensate dampening effects like, e.g. internal friction to maintain constant amplitude(s).

(ii) By the amplitude of the oscillation: Whereas the amplitude (stroke) of reciprocation of a grate element is in the order of multiples of the median of the clinker grain diameter, a translational vibration parallel to the conveying direction has a lower amplitude. In many cement clinker lines, the median of the clinker grain diameter $d_m$ is about 1cm, i.e. $d_m \approx$ 1cm. Accordingly (and thus herein), a translational vibration parallel to the conveying direction has an amplitude $A_{vt}$ of less than 0.5cm, i.e. $A_{vt} \le 0.5cm$. In other words, any oscillating translation of a grate element having an amplitude $A_{vt}$ smaller or equal 0.5cm (preferably $A_{vt} \le$ 0.4cm, even more preferred $A_{vt} \le 0.25$cm) is considered a vibration.

(iii) By the direction of the oscillation: Rotational oscillations (= rotational vibrations) and vibrations that are not parallel to the conveying direction can be distinguished from a prior art movement of reciprocating grate elements by the direction of the movement. Reciprocating prior art grate elements are shifted forth and back parallel to the conveying direction.

(iv) By the existence of nodal points: Oscillating elastic deformation obtained by exciting at least one normal mode can be distinguished from previously reported reciprocating grate elements as well, as the nodal points of a vibrating grate element are at least almost static.

Any number of these possibilities can be combined to define a condition for distinguishing a vibration from a reciprocating movement.

For example, the clinker inlet distribution grate for a cement clinker cooler may comprise a chute formed by a number of grate elements being mounted to a support structure. A grate element can be a grate plate or a grate bar. Typically, a grate plate has a rectangular frame to which grate bars (at least one) are mounted. The frame of the grate plates can be considered as an adapter piece for attaching a grate bar to a support structure like, e.g., a cross beam.

The grate elements define a support surface for receiving cement clinker from a kiln. As usual, the grate elements have and/or form coolant openings allowing a coolant flow via the grate elements into the clinker residing on them.

At least one first of the number of grate elements may be coupled to a vibrational drive configured for causing a vibration of the at least one first grate element relative to at least one second grate element and/or a static portion of the support structure. For example, the receiving grate, i.e. the grate of the receiving section may have grate elements being arranged in a row. For example, at least a portion of the grate elements forming a row may be mounted one besides of the other on a cross beam. Multiple rows may be arranged one in front of each other. A vibrational drive may be coupled to at least one of the grate elements and/or at least one of the cross beams to excite a vibration of the cross beam and/or at least one grate element.

Preferably, at least the first grate element is connected via an elastic joint to the support, i.e. to a static portion of the support. This allows to reduce the vibrational stress and thus fatigue of the static portion of the support. By selecting the elastic constant $k$ of the elastic joint, the frequency $\omega$ of the vibration, which in a first

approximation follows $\omega \propto \sqrt{k}$ , can be adjusted.

In a particular preferred example, the first grate element has at least one normal mode, as well known as eigenmode, being excited by the vibrational drive. Thus, the first grate element obeys an oscillating elastic deformation, which can be described by a (dampened) standing wave. This again reduces stress and fatigue of the support structure and thereby contributes to keeping cost down while increasing the lifespan of the support. Oscillating deformations can be excited for example by a hammer mechanism. Thus, the vibrational drive may comprise a hammer mechanism configured to excite at least one standing wave, i.e. at least one oscillating elastic deformation of a grate element, e.g. by providing repetitive hammer strikes to the grate element. The hammer strikes preferably hit the grate element at or in the vicinity of anti-nodal points of the normal mode of the standing wave to be excited by the hammer strikes. As usual antinodes are those portions of the grate element that show a maximum displacement. Nodes or nodal points are those points having a minimum displacement.

Preferably, the period between two subsequent strikes is an integer multiple of the period of the normal mode. This is particularly efficient and reduces stress and thus fatigue of the grate element.

At least one grate element being coupled to the vibrational drive for exciting at least one normal mode is preferably connected to the support structure at or in the vicinity of the nodes of the excited normal mode.

The support structure may have at least one first beam, wherein at least two first grate elements are mounted to the first beam and the vibrational drive is coupled to the first beam. This enables to couple and thus drive a number of grate elements to a single vibrational drive.

Preferably, the first beam has at least one normal mode, wherein this at least one normal mode is excited by the vibrational drive. The first beam may be mounted at nodal points to an at least essentially static portion of the support structure. The vibrational drive may be coupled to at least one antinode of the first beam.

The support structure may comprise at least one second beam and at least two further first grate elements being mounted to the second beam. A vibrational drive may be coupled to the second beam and may be configured to cause a vibration of the second beam. Preferably the excited normal modes of the first and second beams are essentially the same. This eases assembly of the grate surface.

For example, the grate of the receiving section may have at least two first grate elements, wherein the vibrational drive excites coherent oscillations of the at least two first grate elements, said coherent oscillations each having a phase $\varphi_i$, wherein the index $i \in \{1, 2, 3, ...\}$ identifies different first grate elements. Preferably, the difference between different phases $\varphi_i$, $\varphi_j$ ($i \neq j$) is greater than 0 and non-equal to integer multiples of $2\pi$. In a particularly preferred example, the phase difference $\Delta\varphi = |\varphi_i - \varphi_j|$ is in between of $\pi/2$ and $3\pi/2$, i.e. $\pi < 2. \Delta\varphi < 3\pi$. With this optional, but preferred choice, the oscillations are almost anti-symmetric, perfect anti-symmetric oscillations would have a phase difference $\Delta\varphi$ of $\pi$. If at least one pair of first grate elements oscillates at least almost anti-symmetrically, vibrations of the support structure are reduced. Further, a single vibrational drive may excite the vibration of both grate elements of the pair, simplifying the construction. Force and counterforce being exerted by the vibrational drive may then at least partially compensate each other. For simplicity it has been assumed, that the mass of the grate elements forming a pair is the same. But this is only a preferred example. An at least almost anti-symmetric vibration of a pair of two grate elements in any case reduces vibrations of the support structure, but it is preferred, if the mass $m_i$ of the at least two first grate elements is identical within ±25%, more preferred within ±10%, ±5%, ±1% or even better (i.e. within a smaller margin).

The vibrational drive may for example comprise a motor with an output shaft, wherein the output shaft is coupled to an unbalanced shaft and wherein the unbalanced shaft is rotatably supported by at least one radial bearing being connected with the at least one first grate element and/or at least one support bar supporting at least one, preferably a number of grate elements. Particularly preferred, the vibrational drive has at least one pair of unbalanced shafts being arranged in parallel, and driven to rotate in opposite directions with at least essentially the same absolute value of the rotational speed (i.e. within ±25%, more preferred with ±10%, ±5%, ±1% or even better). This again reduces stress to the support structure and allows to excite an essentially longitudinal vibration in case the radial bearings of the two shafts are mounted pairwise to the same grate element(s) and/or support beam.

A clinker cooler with a clinker inlet, may comprise the above explained receiving section. The receiving section may be followed by at least one second subsequent grate section. The second grate section may comprise at least one pusher, being driven by a pusher drive, pushing the pusher in a conveying direction (i.e. in a forward direction) and retracting the pusher subsequently for conveying a clinker bed on the second grate surface. Preferably, the stroke of the pusher is at least 10 times the amplitude $A_{vT}$ of an optional translational vibration of the at least one first grate element of the receiving section.

The receiving section of the clinker cooler provides a more homogeneous clinker distribution on the subsequent second cooling grate. This contributes to increased tertiary and secondary air temperatures, i.e. an increased heat recuperation. The efficiency of the cement clinker line is enhanced.

In a preferred example the cement clinker cooler has a controller. The controller may be configured to activate the at least one vibrational drive unit for at least a portion of the time when a pusher of the second grate section moves forward, thereby pushing at least a portion of a clinker bed in the conveying direction.

Even more preferred, the at least one vibrational drive unit is stopped for at least a portion of the time when the pusher is retracted, i.e. when the pusher moves in the direction opposite to the conveying direction.

**Description of Drawings**

In the following the invention will be described by way of example, without limitation of the general inventive concept, on examples of embodiment with reference to the drawings.

Figure 1 shows a receiving section of a clinker cooler.

Figure 2 shows a sectional view of a row of grate plates of a receiving section of a clinker cooler.

Figure 2A shows a vibrational drive being mounted to a cross beam.

Figures 3 to 8 and 10 each show a sectional view of another row of grate plates of a receiving section of a clinker cooler.

Figure 9 shows a detail of Fig. 8.

Figure 11 shows a detail of Fig. 10.

Figure 12 shows a cross sectional view of the grate plates in Figures 3 to 8 and 10.

Figure 13 shows a kiln and a clinker cooler of a cement clinker plant.

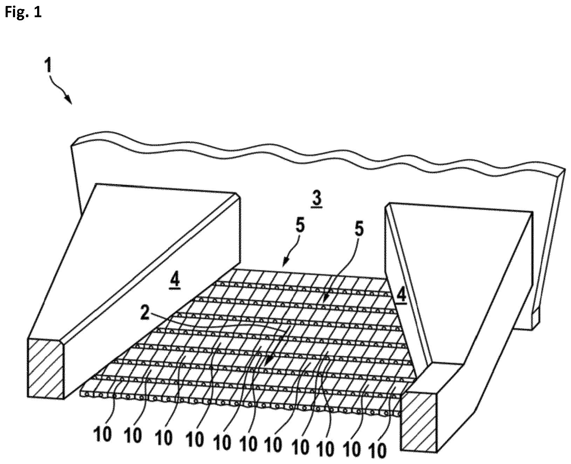

Figure 1 shows an example of a clinker inlet distribution system 1. The clinker inlet distribution system 1 comprises a clinker inlet distribution grate, briefly referred to as grate or distribution grate. The grate comprises grate plates 10 being arranged one besides of the other in stepped rows 5. The rear part of each row 5 is overlapped by the front part of its preceding row 5 (in the direction of transport 2), thereby forming a structure resembling a stair. Each step, i.e. row 5, may comprise or be constituted of grate plates 10 which are arranged side by side along the longitudinal direction of the row 5, which is perpendicular to the conveying direction 2. The clinker inlet distribution grate extends from a rear wall 3 in the conveying direction 2 to a subsequent second grate of a clinker cooler. Besides of the clinker inlet distribution grate are side walls 4, e.g., of some refractory material. In an example according to the invention at least a number of grate plates 10 may be coupled to and/or comprise a vibrational drive for causing a vibration of at least a portion of the grate surface 17.

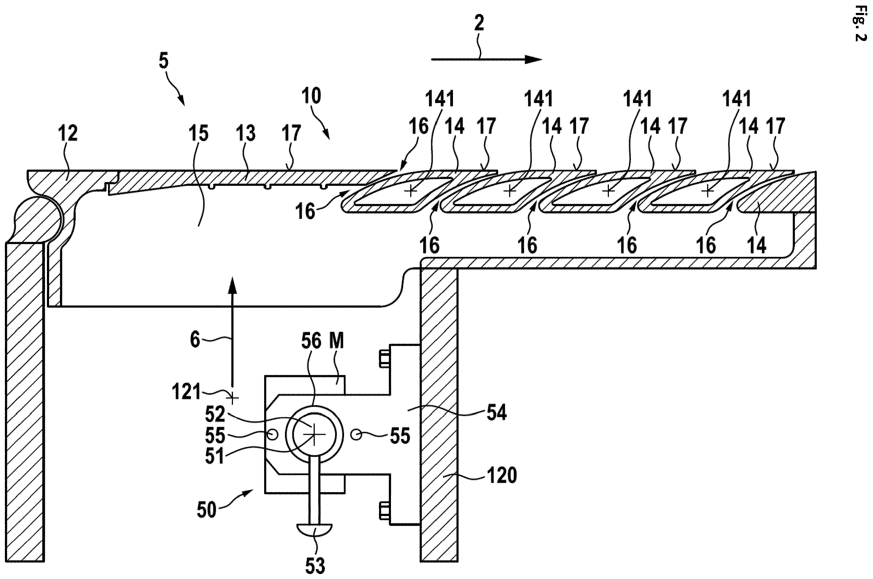

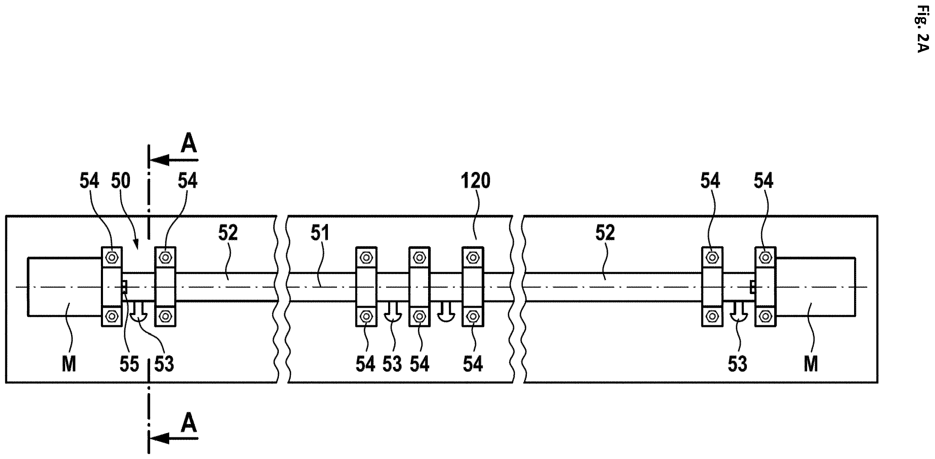

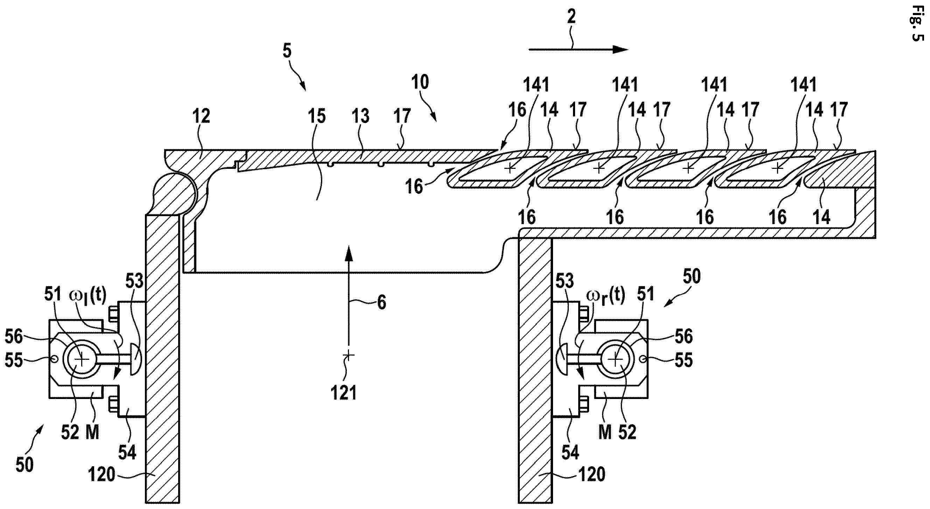

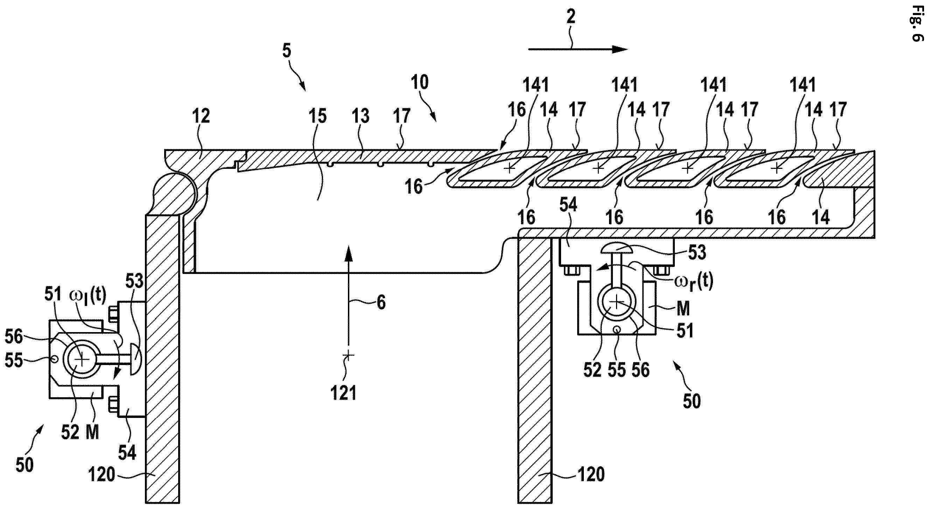

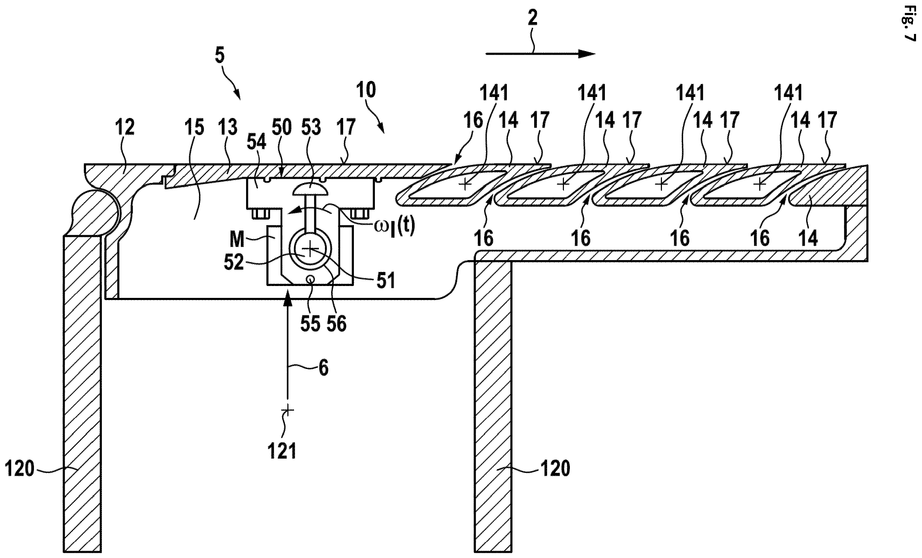

Fig. 2 to Fig. 8 and 10 each show a cross section of different examples of a row 5. The section plane is parallel to the conveying direction 2 and orthogonal to a longitudinal axis 121 of a cross beam 120 supporting the grate plates 10 being aligned on the cross beam 120 to form a row 5 (see Fig. 1). A support structure of the clinker inlet distribution system may consist of or comprise a cross beam 120 (see Fig. 2 to Fig. 7). Attaching the grate plates 10 to a cross beam 120 has been the subject of a number of publications, e.g. of US patent No. 5,862,906, being incorporated herein as if fully disclosed. For simplification the attachment is not depicted here. Further, the cross beam 120 may be used to provide a coolant flow 6 to the grate plates 10 as indicated by an arrow 6.

The grate plate 10 in Fig. 2 has a frame 12 being connected to the cross beam 120, for example as taught by US patent No 5,862,906. The frame 12 supports grate bars 14, 13 with coolant channels 16. The grate plate and the grate bars 13, 14 each have an up facing surface 17, configured for supporting cement clinker and thus referred to as support surface 17.

A vibrational drive may be attached to the cross beam 120. The vibrational drive may have one or more vibrational drive units 50. A vibrational drive unit 50 may have at least one pillow block 54 or any other means for attaching the vibrational drive unit 50, e.g. to the cross beam 120 and/or at least one grate plate 10. The optional pillow block 54 may have a housing with an included anti-friction bearing 56 rotatably supporting a shaft 52 having a rotational axis 51. Attached to the shaft 52 is at least one anti-balance weight 53. The shaft 52 may be coupled to a drive shaft of a motor M. The motor M may be attached, e.g. to the pillow block 50 by fastening means 55, e.g. screws 55. Engaging the motor M causes the unbalanced shaft 52 to rotate, resulting in a circular vibration of the cross beam 120 and thus as well of grate plate(s) 10 being attached to it.

Fig. 2A shows a rear view of the front wall of a cross beam 120. The vibrational drive 50 in Fig. 2A is very similar to the vibrational drive as depicted in Fig. 2. In this example, a number of pillow blocks 54 rotatably support a shaft 52 to which a number of (at least one) anti-balance weight(s) 53 are attached. The shaft 52 may extend over more than half of the length of the cross beam 120. In the depicted example, it extends over more than 90% of the length of the cross beam 120. The shaft 52 in Fig. 2A may be driven by two (at least one) motor(s) M. As depicted, each motor may be attached, e.g., to a pillow block 54. Alternatively, the at least one motor M may be attached directly to the cross beam 120.

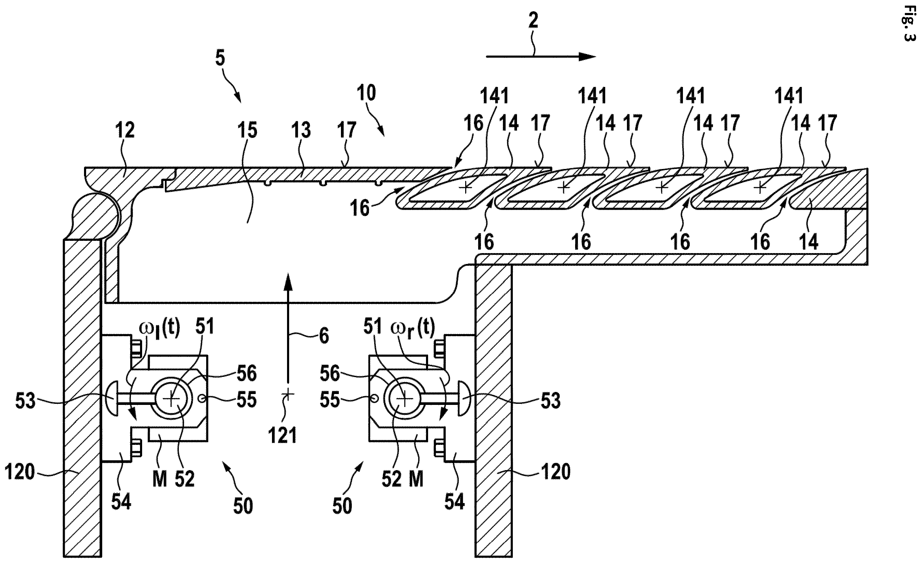

The pillow blocks 54 are preferably grouped in pairs, one to the right and one to the left of an anti-balance weight 53 as depicted to the left and to the right end section of the cross beam 120. Grouping in pairs is considered to include the situation as depicted in the middle segment of the cross beam 120: Each anti-balance weight 53 has a pillow block 54 to its left and to its right, wherein the distance of pillow blocks 54 forming a pair is preferably smaller than 10 times the diameter of the shaft 52, even more preferred smaller or equal than 7.5 times, smaller or equal 5 times or even smaller. Additionally or alternatively, the distance between an anti-balance weight 53 to its neighbored pillow block 54 or to its neighbored pillow blocks 54 (in case they form a pair) is smaller than 3 times the diameter of the shaft 52, even more preferred smaller than 2 times (smaller than once, ½ times) the diameter of the shaft 52. The smaller the distance between an anti-balance weight 53 and a pillow block 54, the better is the excitation of the vibration of the grate plates being mounted to the cross beam 120 (see e.g. Fig. 2). The position and number of the vibrational drive 50 of Fig. 2a may be altered, e.g. as apparent from Fig. 3 to 7.

The example in Fig. 3 is very similar to the example in Fig. 2 with 2A and the description of Fig. 2 can be read on Fig. 3, as well. A difference is that the vibrational drive comprises at least two vibrational drive units 50, each optionally having at least one pillow block 54. A first of the at least two pillow blocks 54 may be mounted to a first portion of the cross beam 120, for example as depicted to a rearward side wall of the cross beam 120. A second of the at least two pillow blocks 54 may be mounted to the same or another portion of the cross beam 120 and/or the grate plate 10, for example as depicted to the forward side wall of the cross beam 120. As usual rearward and forward reference to the conveying direction 2. At least the first and the second pillow blocks 54 may each have at least one bearing 56 rotatably supporting a shaft 52 being coupled to a motor M. In the depicted example, each of the two shafts is coupled to a motor M. Alternatively or optionally the two shafts may be coupled by a transmission. In this case a second motor may be omitted. A single motor may drive via the transmission at least two shafts 52.

The shafts 52 further have at least one anti-balance weight 53 attached to them. In a preferred example, the unbalances of the two shafts are equal to each other. The two shafts 52 are preferably driven by the at least one motor M to rotate in opposite directions and with the same absolute angular velocity. Thus, if e.g. the angular velocity of the first shaft may be denoted $\omega_l(t)$ and correspondingly the angular velocity of the second shaft may be denoted $\omega_r(t)$, wherein $t$ is a measure of time, it is preferred if $\omega_l(t) = -\omega_r(t) \forall t$. This results in a vibration of the cross beam which is at least almost linear and parallel, improving a reduction of a slip-stick effect of clinker residing on the grate plate's support surface 17.

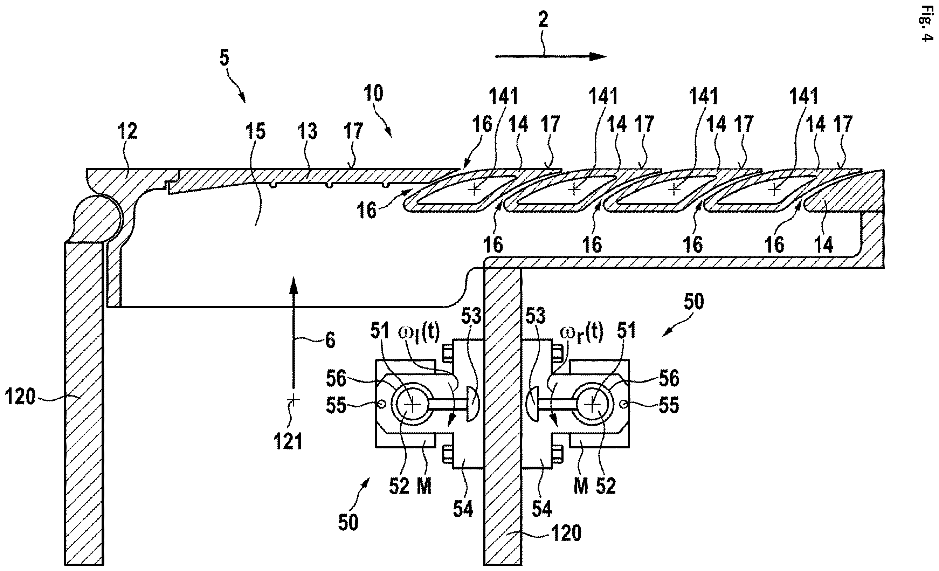

Other positions of vibrational drives 50 are depicted in Fig. 4 to Fig. 7 and the description of Fig. 3 can be read on these Figures, as well. It is noted that the positions of the vibrational drives as shown in Figures 2 to 7 can be combined. Further, some figures show two or more vibrational drives 50. In these examples at least one of the vibrational drives 50 may be omitted.

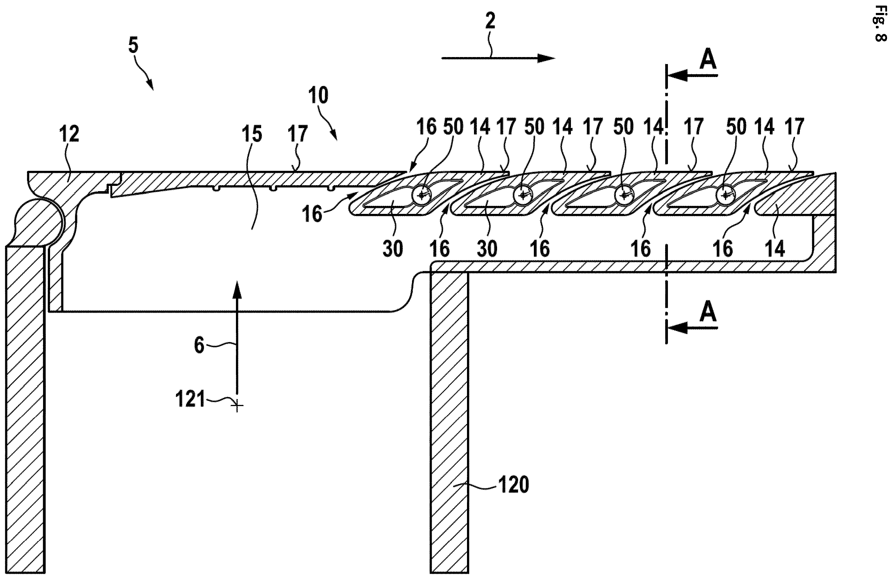

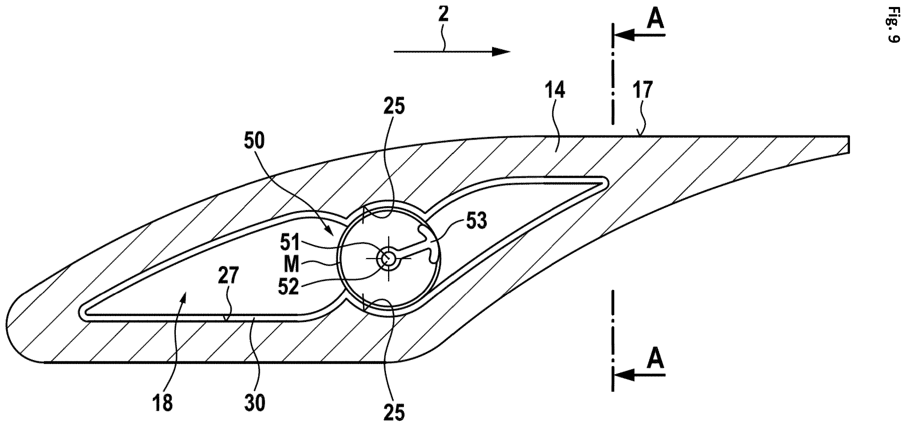

Fig. 8 shows another example for causing a vibration of at least a portion of the grate surface 17. As can be seen in Fig. 1, the grate plates 10 may have grate bars 14 each having a longitudinal axis 141 (see Fig. 2) extending parallel to the longitudinal axis 121 of the cross beam 120. At least one of the grate bars 14 may have at least one recess 18 extending from at least one of its sides and defining a space 18 extending along an axis 141, which in this example coincides with a rotational axis 51 of a vibrational drive unit 50 (see Fig. 8 and compare with the detail of the grate bar 14 in Fig. 9).

A vibrational drive with at least one vibrational drive unit 50 may be mounted into the space 18 and to the grate bar 14. For example, the vibrational drive may comprise a motor M with a drive shaft 52. Attached to the drive shaft 52 may be an anti-balance weight 53, for example directly as shown in Fig. 8. The drive shaft 52 and the anti-balance weight 53 may form a single piece or alternatively they can be separate parts being mounted to each other. Accordingly, engaging the motor causes a rotation of the anti-balance weight 53 and thus a vibration of the grate bar 14. The recess 18 is defined by an inner surface 27 of the grate bar 14. This inner surface 27 may have at least two surface sections 25 being dimensioned to receive the rotational drive unit 50. In the depicted example, the two surface sections 25 are cylinder surface sections being coaxially aligned with the rotational axis 52 and configured to receive and support the motor M. In this example the motor M has an at least essentially cylindrical housing. Other shapes are possible as well, the corresponding surface sections 25 have to be adapted accordingly. In a preferred example, the vibrational drive unit 50 is press fitted into the recess 18. After attaching at least one vibrational drive into a recess 18 of a grate bar 14, the opening(s) of the recess 18 may be closed by a cover 30. Thereby, the vibrational drive is protected from being contaminated with clinker dust or other debris, which could shorten its lifespan.

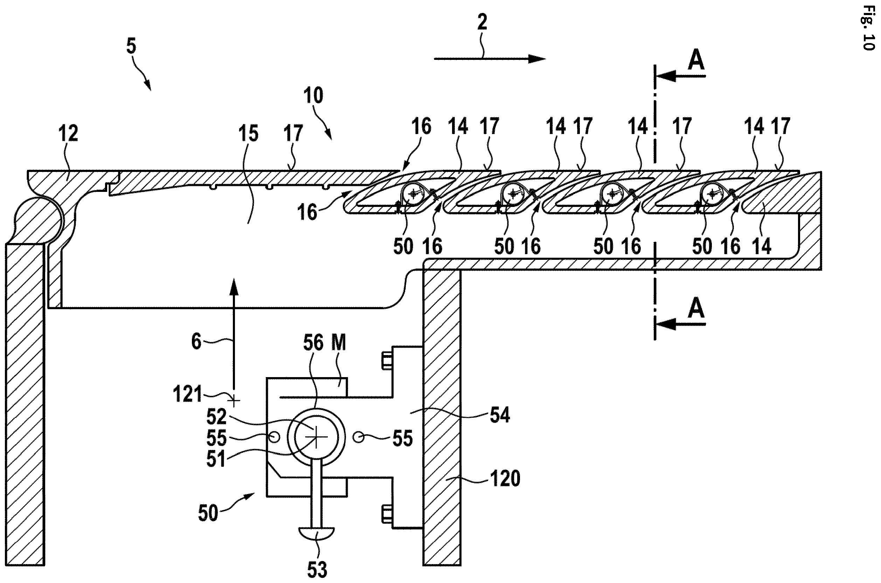

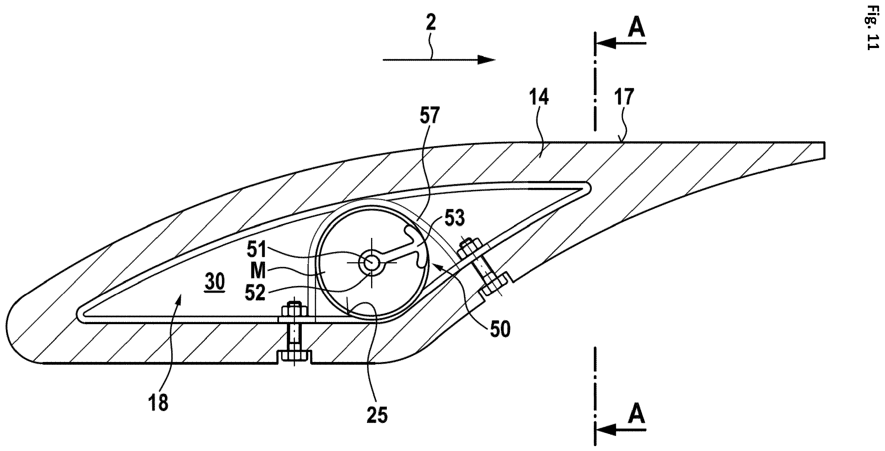

The example in Fig. 10 and 11 is almost identical to the example being explained with reference to Fig. 8 and 9 and the description of Fig. 8 and 9 can be read on the example of Fig. 10 and 11 as well, respectively. A difference is that the inner surface 27 defining the recess 18 does not provide two surface sections 25 in between of which the vibrational drive unit 50 may, e.g., be attached by press fitting. Instead, the cylindrical drive unit 50 is attached to a surface section 25 of the inner surface 27 by a strap 57, which may be attached in any manner known in the art, e.g. by gluing, brazing, welding, riveting, bolting or any combination thereof.

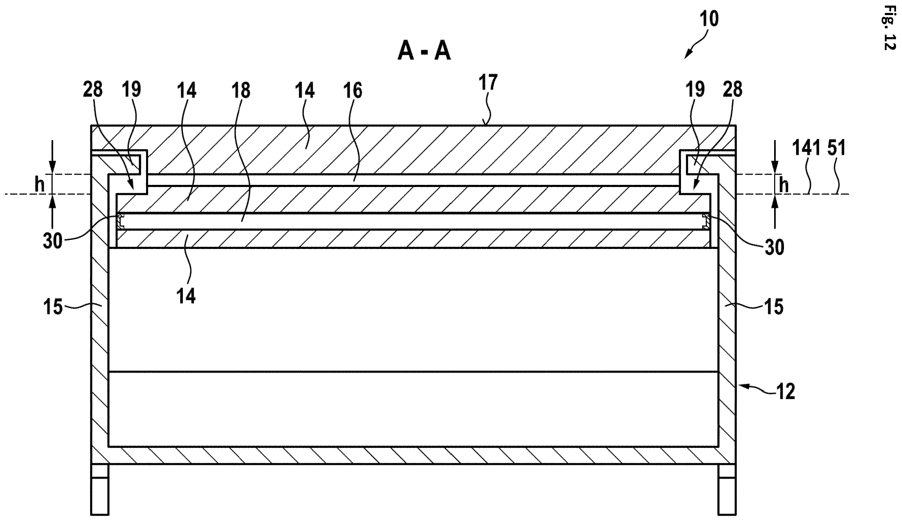

As can be seen in the cross-sectional view in Fig. 12, the grate plate 10 of the two examples being depicted in Fig. 8 to 11 has a frame 12 with side walls 15, each having a rim providing a guide rail 19. The guide rails 19 each engage into a groove 28 of the grate bars 14. The height of the groove 28 may be chosen to be greater than the thickness (i.e. the dimension perpendicular to the grate surface 17) of the guide rail as indicated by the dimension h. When engaging, i.e. activating, the vibrational drive, the grate bar 14 may vibrate relative to the frame perpendicular to the conveying direction. In other words, the grate bar 14 may translate in an oscillating movement up and down. The dimension h may as well be reduced to (almost) zero to enable only a sliding movement parallel to the conveying direction 2 which simplifies assembly of the grate plate 10. In this case a translation of the grate bar 14 perpendicular to the longitudinal axis of the guide rail 19 (which is parallel to the conveying direction 2) and thus relative to the frame is blocked. Accordingly, the vibrational drive excites an oscillation of the grate bar 14, i.e. it excites at least one of its normal modes. Wear is thus reduced.

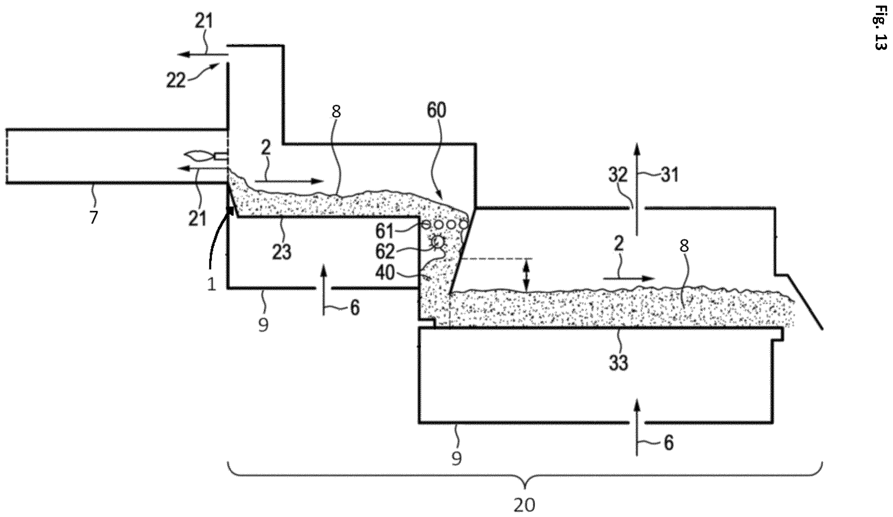

Fig. 13 shows a simplified cement clinker plant. Clinker is burnt and sintered in a kiln 7 and released to a clinker cooler inlet distribution grate 1, i.e. to the grate 1 of the receiving section as well referred to as receiving grate 1 of a clinker cooler 20. The clinker cooler 20 has at least one second grate section 23 to which the clinker is unloaded from the receiving section 1. On the receiving grate 1 and on the second grate section 23 the clinker is cooled down by a coolant flow 6. The coolant flows via grate openings like 16 (see Fig. 2 to 8 and 10) into a clinker bed 8. There, a direct heat exchange takes place and the heated coolant leaves the clinker cooler as indicated by arrows 21, for example as depicted via the kiln 7 and/or a tertiary air opening 22 in a cooler housing.

Optionally, the clinker may be crushed by an optional intermediate crusher 60. Below the optional intermediate crusher 60 with rolls 61, 62 may be an optional clinker reservoir 40. An optional third grate section 33 may be used to convey and cool down the clinker bed 8 by the coolant flow 6. Heated coolant may exit the clinker cooler above the optional third grate section 33 as indicated by an arrow 31 via an opening 32 in the cooler housing. As apparent the grates or grate sections 1, 23, 33 may have a base 9 supporting at least one of the grates 1, 23 and 33. The receiving grate 1 in Fig. 13 can be the receiving grate 1 as depicted in Fig. 1. The grate plates 10 in Fig. 1 can be any of the grate plates in Fig. 2 to 8, 10 and 12.

## List of reference numerals

| | |
|---|---|
| 1 | receiving section / clinker inlet distribution grate |
| 2 | conveying direction |
| 3 | rear wall |
| 4 | side wall |
| 5 | row |
| 6 | coolant flow |
| 7 | kiln |
| 8 | clinker bed |
| 9 | base |
| 10 | grate plate |
| 12 | frame |
| 13 | grate bar |
| 14 | grate bar |
| 15 | side wall |
| 16 | coolant channel |
| 17 | grate surface |
| 18 | recess / space |
| 19 | guide rail |
| 20 | clinker cooler |
| 21 | heated coolant |
| 22 | tertiary air opening |
| 23 | second grate section |
| 25 | surface section |
| 27 | inner surface of grate bar |
| 28 | groove |
| 30 | cover |
| 31 | heated coolant |
| 32 | opening in cooler housing |
| 33 | third grate section |
| 50 | vibrational drive unit |
| 51 | rotational axis of shaft 52 |

| 52 | shaft |
| 53 | anti-balance weight |
| 54 | pillow block |
| 55 | fastening means |
| 56 | bearing |
| 57 | strap |
| 60 | crusher |
| 61 | crushing rolls |
| 62 | distributing roll |
| 120 | cross beam |
| 121 | longitudinal axis of cross beam |
| M | motor |

## Claims

1. A clinker inlet distribution grate (1) for a cement clinker cooler, comprising a chute being mounted to a base, wherein the chute is formed by a number of grate elements (12, 13, 14) being mounted to a support structure (120) and defining a support surface (17) for receiving cement clinker from a kiln, the grate elements have and/or form coolant openings configured for allowing a coolant flow via the grate elements into the cement clinker residing on the grate elements,

   wherein at least one first of the number of grate elements (12, 13, 14) is coupled to at least one vibrational drive unit (50) for causing a vibration of the at least one first grate element (12, 13, 14) relative to at least one second grate element (12, 13, 14) and/or a static portion of the support structure and/or the base,
   **characterized in that** the vibration is

   (i) an oscillating translation of a grate element parallel to the conveying direction configured to have an amplitude $A_{vt}$ smaller or equal 0.5cm and/or
   (ii) a rotational vibration and/or a vibration not parallel to the conveying direction and/or
   (iii) an oscillating elastic deformation, obtainable by exciting at least one normal mode.

2. The grate (1) according to claim 1, wherein at least the first grate element (12, 13, 14) is attached via an elastic joint to the support (120).

3. The grate (1) according to claims 1 or 2, wherein the support structure has at least one first beam (120), wherein at least two first grate elements (12, 13, 14) are mounted to the first beam and wherein the vibrational drive unit (50) is coupled to the first beam (120).

4. The grate (1) of claim 3, wherein the first beam (120) has at least one normal mode, wherein the vibrational drive unit (50) is configured to excite this at least one normal mode.

5. The grate (1) according to claim 3 or 4, wherein the support structure has at least one second beam (120), at least two further first grate elements (12, 13, 14) are mounted to the second beam, the vibrational drive unit (50) is coupled to the first beam (120) and the second beam (120) and configured to cause a vibration of the second beam (120), wherein the normal mode of the first and second beams are the same.

6. The grate (1) according to one of claims 1 to 5, wherein
   the grate (1) has at least two first grate elements (12, 13, 14), wherein the at least one vibrational drive unit (50) is configured to excite coherent oscillations of the at least two first grate elements (12, 13, 14), said coherent oscillations each having a phase $\varphi_i$ and where the phase difference $\Delta\varphi$ between the phases $\varphi_i$ is greater than 0 and non-equal to integer multiples of $2\pi$.

7. The grate (1) according to claim 6, wherein the phase difference $\Delta\varphi$ obeys the relation $\pi < 2 \cdot \Delta\varphi < 3 \cdot \pi$.

8. The grate (1) according to claim 6 or 7, wherein the mass $m_i$ of the at least two first grate elements is identical within $\pm 25\%$.

9. The grate (1) according to one of claims 1 to 8, wherein
   the vibrational drive unit (50) comprises a motor with an output shaft (52), wherein the output shaft (52) is coupled to an anti-balance weight (53) wherein the thereby unbalanced shaft (52) is rotatably supported by at least one radial bearing (56) having a stator being connected with the at least one first grate element (12, 13, 14).

10. A cement clinker cooler (20) with a clinker inlet and a clinker outlet having a clinker inlet distribution grate (1) and a subsequent second grate (23), being configured for receiving clinker from the clinker inlet distribution grate and for conveying the clinker in a conveying direction (2) towards the clinker outlet, wherein
    the clinker inlet distribution grate (1) is a grate of any one of the previous claims.

11. The cement clinker cooler of claim 10, wherein the second grate has conveying means with at least one pusher configured to non-continuously push at least a portion of a clinker bed away from the clinker inlet distribution grate (1) and wherein the cement clinker cooler has a controller being configured to activate at least one of the at least one vibrational drive unit/s (50) while the pusher moves in the conveying direction (2).

12. The cement clinker cooler of claim 11, wherein the vibrational drive unit (50) is configured to stop for at least a portion of the time when the pusher moves against the conveying direction (2).

**Patentansprüche**

1. Klinkereinlaufverteilrost (1) für einen Zementklinkerkühler, welcher eine an einem Unterteil befestigte Schurre aufweist, wobei die Schurre durch eine Anzahl Rostelemente (12, 13, 14) gebildet wird, die an einer Stützstruktur (120) befestigt sind und eine Auflage (17) zur Aufnahme von Zementklinker aus einem Ofen haben, die Rostelemente haben und/oder bilden Kühlmittelöffnungen, die ausgelegt sind, einen Kühlmittelfluss durch die Rostelemente in den auf den Rostelementen befindlichen Zementklinker zu ermöglichen,

    wobei zumindest ein erstes der Anzahl der Rostelemente (12, 13, 14) mit zumindest einer Vibrationsantriebseinheit (50) zur Erzeugung einer Vibration des zumindest einen ersten Rostelements (12, 13, 14) relativ zu zumindest einem zweiten Rostelement (12, 13, 14) und/oder einem statischen Teil der Stützstruktur und/oder dem Unterteil,
    **dadurch gekennzeichnet, dass** die Vibration

    (i) eine oszillierende Translation eines Rostelements parallel zur Förderrichtung, ausgelegt für eine Amplitude $A_{vt}$ kleiner oder gleich $0.5cm$ und/oder
    (ii) eine rotierende Vibration und/oder eine Vibration nicht parallel zur Förderrichtung und/oder
    (iii) eine oszillierende elastische Verformung, erzeugbar durch Anregung zumindest einer Eigenschwingung ist.

2. Der Rost (1) nach Anspruch 1, wobei zumindest das erste Rostelement (12, 13, 14) über eine elastische Verbindung mit der Stützstruktur (120) verbunden ist.

3. Der Rost (1) nach Anspruch 1 oder 2, wobei die Stützstruktur zumindest einen ersten Träger (120) hat, wobei zumindest zwei erste Rostelemente (12, 13, 14) an dem ersten Träger befestigt sind und, dass die Vibrationsantriebseinheit (50) mit dem ersten Träger (120) verbunden ist.

4. Der Rost (1) nach Anspruch 3, wobei der erste Träger (120) zumindest eine Eigenschwingung hat, wobei die Vibrationsantriebseinheit (50) zur Anregung dieser zumindest einen Eigenschwingung ausgelegt ist.

5. Der Rost (1) nach Anspruch 3 oder 4, wobei die Stützstruktur zumindest einen zweiten Träger (120) hat, zumindest zwei weitere erste Rostelemente (12, 13, 14) mit dem zweiten Träger verbunden sind, die Vibrationsantriebseinheit (50) mit dem ersten Träger (120) und dem zweiten Träger (120) verbunden ist und dazu ausgelegt ist, eine Vibration des zweiten Trägers (120) hervorzurufen, wobei die Eigenschwingung des ersten Trägers und des zweiten Trägers gleich ist.

6. Der Rost (1) nach einem der Ansprüche 1 bis 5, wobei der Rost (1) zumindest zwei erste Rostelemente (12, 13, 14) hat, wobei die zumindest eine Vibrationsantriebseinheit 50 zur Anregung kohärenter Oszillationen der zumindest zwei ersten Rostelemente (12, 13, 14) ausgelegt ist, diese kohärenten Oszillationen jeweils eine Phase $\varphi_i$ haben und wobei die Phasendifferenz $\Delta\varphi$ zwischen den Phasen $\varphi_i$ größer als 0 und ungleich ganzzahligen Vielfachen von $2\pi$ ist.

7. Der Rost (1) nach Anspruch 6, wobei die Phasendifferenz $\Delta\varphi$ der Gleichung $\pi < 2 \cdot \Delta\varphi < 3 \cdot \pi$ genügt.

8. Der Rost (1) nach Anspruch 6 oder 7, wobei die Masse $m_i$ der zumindest zwei ersten Rostelemente innerhalb von $\pm 25\%$ identisch ist.

9. Der Rost (1) nach einem der Ansprüche 1 bis 8, wobei die Vibrationsantriebseinheit (50) einen Motor mit einer Abtriebswelle (52) aufweist, wobei die Abtriebswelle (52) mit einer Unwuchtmasse (53) verbunden ist wobei die dadurch unwuchtige Welle (52) von zumindest einem Radiallager (56) rotationsgelagert ist, das einen Außenring hat, welcher mit dem zumindest einen ersten Rostelement (12, 13, 14) verbunden ist.

10. Zementklinkerkühler (20) mit einem Klinkereinlass und einem Klinkerauslass mit einem Klinkereinlaufverteilrost (1) und einem nachfolgenden zweiten Rost (23) ausgelegt zur Aufnahme von Klinker vom Klinkereinlaufverteilrost und zur Förderung des Klinkers in einer Förderrichtung (2) in Richtung des Klinkerauslasses, wobei der Klinkereinlaufverteilrost (1) ein Rost nach einem der vorhergehenden Ansprüche ist.

11. Zementklinkerkühler nach Anspruch 10, wobei

der zweite Rost Förderorgane hat mit zumindest einem Schieber ausgelegt zum nicht kontinuierlichen Schieben zumindest eines Teils eines Klinkerbetts weg vom Klinkereinlaufverteilrost (1) und dadurch, dass der Zementklinkerkühler eine Steuerung hat, die ausgelegt ist zum Aktivieren zumindest einer der zumindest einen Vibrationsantriebseinheit/en (50) während der Schieber sich in Förderrichtung (2) bewegt.

12. Zementklinkerkühler nach Anspruch 11, wobei die Vibrationsantriebseinheit (50) dafür ausgelegt ist, zumindest für einen Teil der Zeit, in der der Schieber sich gegen die Förderrichtung (2) bewegt, anzuhalten.

**Revendications**

1. Grille de distribution d'entrée de scorie (1) pour un refroidisseur de scorie de ciment, comprenant une goulotte montée sur une base, dans laquelle la goulotte est formée par un nombre d'éléments de grille (12, 13, 14) montés sur une structure de support (120) et définissant une surface de support (17) pour recevoir de la scorie de ciment d'un four, les éléments de grille ont et/ou forment des ouvertures de caloporteur configurées pour permettre une circulation de caloporteur via les éléments de grille jusque dans la scorie de ciment résidant sur les éléments de grille,

dans laquelle au moins un premier du nombre d'éléments de grille (12, 13, 14) est couplé à au moins une unité d'entraînement vibratoire (50) pour provoquer une vibration de l'au moins un premier élément de grille (12, 13, 14) par rapport à au moins un second élément de grille (12, 13, 14) et/ou une portion statique de la structure de support et/ou la base,
**caractérisée en ce que** la vibration est

(i) une translation oscillante d'un élément de grille parallèle à la direction de transport configurée pour avoir une amplitude $A_{\parallel t}$ inférieure ou égale à 0,5 cm et/ou
(ii) une vibration rotationnelle et/ou une vibration non parallèle à la direction de transport et/ou
(iii) une déformation élastique oscillante, pouvant être obtenue par l'excitation d'au moins un mode normal.

2. Grille (1) selon la revendication 1, dans laquelle au moins le premier élément de grille (12, 13, 14) est attaché via un joint élastique au support (120).

3. Grille (1) selon les revendications 1 ou 2, dans laquelle la structure de support a au moins une première poutre (120), dans laquelle au moins deux premiers éléments de grille (12, 13, 14) sont montés sur la première poutre et en ce que l'unité d'entraînement vibratoire (50) est couplée à la première poutre (120).

4. Grille (1) selon la revendication 3, dans laquelle la première poutre (120) a au moins un mode normal, dans laquelle l'unité d'entraînement vibratoire (50) est configurée pour exciter cet au moins un mode normal.

5. Grille (1) selon la revendication 3 ou 4, dans laquelle la structure de support a au moins une seconde poutre (120), au moins deux premiers éléments de grille (12, 13, 14) supplémentaires sont montés sur la seconde poutre, l'unité d'entraînement vibratoire (50) est couplée à la première poutre (120) et à la seconde poutre (120) et configurée pour provoquer une vibration de la seconde poutre (120), dans laquelle le mode normal des première et seconde poutres est le même.

6. Grille (1) selon l'une des revendications 1 à 5, dans laquelle la grille (1) a au moins deux premiers éléments de grille (12, 13, 14), dans laquelle l'au moins une unité d'entraînement vibratoire (50) est configurée pour exciter des oscillations cohérentes des au moins deux premiers éléments de grille (12, 13, 14), lesdites oscillations cohérentes ayant chacune une phase $\varphi_i$ et où la différence de phase $\Delta\phi$ entre les phases $\varphi_i$ est supérieure à 0 et non égale à des nombres entiers multiples de $2\pi$.

7. Grille (1) selon la revendication 6, dans laquelle la différence de phase $\Delta\phi$ obéit à la relation $\pi < 2\cdot\Delta\phi < 3\cdot\pi$.

8. Grille (1) selon la revendication 6 ou 7, dans laquelle la masse $m_i$ des au moins deux premiers éléments de grille est identique à $\pm$ 25 % près.

9. Grille (1) selon l'une des revendications 1 à 8, dans laquelle l'unité d'entraînement vibratoire (50) comprend un moteur avec un arbre de sortie (52), dans laquelle l'arbre de sortie (52) est couplé à un poids d'anti-équilibrage (53) dans laquelle l'arbre (52) ainsi non équilibré est supporté en rotation par au moins un palier radial (56) ayant un stator connecté à l'au moins un premier élément de grille (12, 13, 14).

10. Refroidisseur de scorie de ciment (20) avec une entrée de scorie et une sortie de scorie ayant une grille de distribution d'entrée de scorie (1) et une seconde grille (23) suivante, configuré pour recevoir de la scorie de la grille de distribution d'entrée de scorie et pour transporter la scorie dans une direction de transport (2) vers la sortie de scorie, dans lequel la grille de distribution d'entrée de scorie (1) est une grille selon l'une quelconque des revendications précédentes.

**11.** Refroidisseur de scorie de ciment selon la revendication 10, dans lequel la seconde grille a un moyen de transport avec au moins un pousseur configuré pour pousser de façon non continue au moins une portion d'un lit de scorie en éloignement de la grille de distribution d'entrée de scorie (1) et dans lequel le refroidisseur de scorie de ciment a un dispositif de commande configuré pour activer au moins l'une des au moins une unité d'entraînement vibratoire (50) tandis que le pousseur se déplace dans la direction de transport (2).

**12.** Refroidisseur de scorie de ciment selon la revendication 11, dans lequel l'unité d'entraînement vibratoire (50) est configurée pour s'arrêter pendant au moins une portion du temps lorsque le pousseur se déplace contre la direction de transport (2).

Fig. 1

Fig. 2

EP 3 828 152 B1

EP 3 828 152 B1

Fig. 2A

14

**Fig. 3**

**Fig. 4**

Fig. 5

Fig. 6

Fig. 7

EP 3 828 152 B1

EP 3 828 152 B1

Fig. 8

20

Fig. 9

Fig. 10

EP 3 828 152 B1

Fig. 11

EP 3 828 152 B1

23

EP 3 828 152 B1

Fig. 12

**Fig. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011055658
- EP 3112786 A1
- EP 0826940 B1
- US 2016223261 A1
- US 5683043 A
- US 2103170 A
- US 5976243 A
- US 5862906 A

**Non-patent literature cited in the description**

- **HARDER.** Latest trends in clinker cooling. ZKG International, 2011, vol. 3, 32
- **KARL V. WEDEL.** Performance of IKN grate coolers. Cement International, 2007, vol. 5, 96